# EUROPEAN PATENT SPECIFICATION

(11) **EP 4 030 520 B1**
(45) Date of publication and mention of the grant of the patent: **02.07.2025**
(21) Application number: 20862188.8
(22) Date of filing: 08.09.2020
(51) Int. Cl.: H01M 10/052, H01M 4/13, H01M 10/0587, H01M 50/10, H01M 10/04

(54) **NON-AQUEOUS ELECTROLYTE SECONDARY BATTERY**
SEKUNDÄRBATTERIE MIT WASSERFREIEM ELEKTROLYT
BATTERIE SECONDAIRE À ÉLECTROLYTE NON AQUEUX

(30) Priority: 11.09.2019 JP 2019165303
(43) Date of publication of application: 20.07.2022
(73) Proprietor: Panasonic Energy Co., Ltd., Moriguchi-shi, Osaka 570-8511 (JP)
(72) Inventor: KOBAYASHI, Kei, Chuo-ku, Osaka-shi, Osaka 540-6207 (JP); MIZAWA, Atsushi, Chuo-ku, Osaka-shi, Osaka 540-6207 (JP); NAKAO, Takaki, Chuo-ku, Osaka-shi, Osaka 540-6207 (JP)
(74) Representative: Novagraaf International SA
(86) International application number: PCT/JP2020/033864
(87) International publication number: WO 2021/049471

(56) References cited:
- WO-A1-2018/168628
- JP-A- 2007 184 234
- JP-A- 2016 532 752
- JP-A- 2017 016 806
- JP-A- 2017 073 328
- US-A1- 2007 154 789
- US-A1- 2019 081 284

## Description

### TECHNICAL FIELD

The present disclosure relates to a non-aqueous electrolyte secondary battery.

### BACKGROUND ART

Conventionally widely used is a non-aqueous electrolyte secondary battery comprising: a wound electrode assembly in which a band-shaped positive electrode and a band-shaped negative electrode are wound with a separator interposed therebetween, and the outermost circumference surface thereof is wound and fixed with a fixing tape; and an exterior housing body that houses the electrode assembly. In such a battery, a negative electrode lead, which is projected from a winding initial end part of the negative electrode, is connected to the exterior housing body to allow the exterior housing body to be a negative electrode terminal. Patent Literature 1 discloses a non-aqueous electrolyte secondary battery in which: a negative electrode lead provided on a winding initial end part of a negative electrode is connected to an exterior housing body; and a current collector exposed part that is in contact with an inner wall surface of the exterior housing body is provided on a winding terminal end part of the negative electrode, for improvement in output characteristics of the battery.

A relevant aqueous electrolyte secondary battery is also disclosed in WO 2018/168628 A1.

### CITATION LIST

### PATENT LITERATURE

PATENT LITERATURE 1: International Publication No. 2016/147564

### SUMMARY

### TECHNICAL PROBLEM

Although the non-aqueous electrolyte secondary battery described in Patent Literature 1 requires not less than a certain contacting pressure between the electrode assembly and the exterior housing body, the electrode assembly with repeated charging and discharging expands, which results in increased contacting pressure. Since the fixing tape is attached to the outermost circumference surface of the electrode assembly, deformation such as flexure may occur on a positive electrode or negative electrode constituting the electrode assembly from an end part of the fixing tape, where the stress is likely to concentrate.

An object of the present disclosure is to provide a non-aqueous electrolyte secondary battery that can prevent the deformation, such as flexure, of the positive electrode and negative electrode from the fixing tape when the electrode assembly expands.

### SOLUTION TO PROBLEM

The non-aqueous electrolyte secondary battery of an aspect of the present disclosure is a non-aqueous electrolyte secondary battery, comprising: a wound electrode assembly in which a band-shaped positive electrode and a band-shaped negative electrode are wound with a separator interposed therebetween; and a metallic exterior housing body that houses the electrode assembly. The positive electrode or the negative electrode is exposed on the outermost circumference surface of the electrode assembly, the fixing tape having a substrate layer and an adhesive layer is attached to the positive electrode or the negative electrode by means of the adhesive layer, and the substrate layer has a surface roughness (Sa) of 40 µm or more on a region having a width of at least 1 mm from the end part.

### ADVANTAGEOUS EFFECT OF INVENTION

The non-aqueous electrolyte secondary battery according to the present disclosure can prevent the deformation, such as flexure, of the positive electrode and negative electrode from the fixing tape when the electrode assembly expands.

### BRIEF DESCRIPTION OF DRAWINGS

FIG. 1 is an axial sectional view of a cylindrical secondary battery of an example of an embodiment.
FIG. 2 is a perspective view of an electrode assembly comprised in the secondary battery illustrated in FIG. 1.
FIG. 3 illustrates a positive electrode and negative electrode constituting the electrode assembly illustrated in FIG. 2 with an unwound state.
FIG. 4 is a sectional view of a fixing tape of an example of an embodiment.
FIG. 5(a) is a plan view of a stress applying apparatus, and FIG. 5(b) is a sectional view from the arrow direction on the A-A line in FIG. 5(a).

### DESCRIPTION OF EMBODIMENTS

Hereinafter, an example of an embodiment of a cylindrical secondary battery according to the present disclosure will be described in detail with reference to the drawings. In the following description, specific shapes, materials, values, directions, and the like, which are examples for facilitating understanding of the present invention, may be appropriately modified with specifications of cylindrical secondary batteries. The exterior housing body is not limited to being in cylindrical form, and may be in rectangular form or the like. When a plurality of embodiments and modified examples are included in the following description, use in appropriate combination of characteristic portions thereof are anticipated in advance.

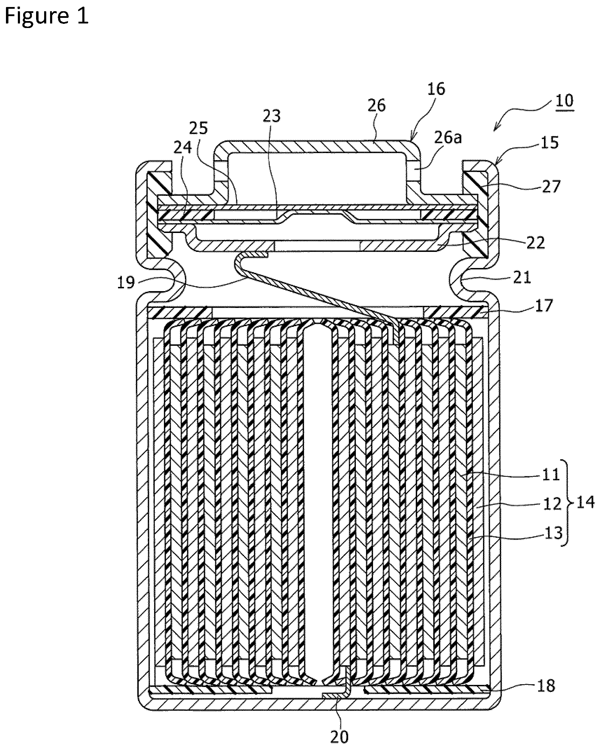

FIG. 1 is an axial sectional view of a cylindrical secondary battery 10 of an example of an embodiment. In the secondary battery 10 illustrated in FIG. 1, an electrode assembly 14 and a non-aqueous electrolyte (not illustrated) are housed in an exterior housing body 15. The electrode assembly 14 has a wound structure in which a positive electrode 11 and a negative electrode 12 are wound with a separator 13 interposed therebetween. For a non-aqueous solvent of the non-aqueous electrolyte (organic solvent), carbonates, lactones, ethers, ketones, esters, and the like may be used, and two or more of these solvents may be mixed to be used. When two or more of the solvent are mixed to be used, a mixed solvent including a cyclic carbonate and a chain carbonate is preferably used. For example, ethylene carbonate (EC), propylene carbonate (PC), butylene carbonate (BC), and the like may be used as the cyclic carbonate, and dimethyl carbonate (DMC), ethyl methyl carbonate (EMC), diethyl carbonate (DEC), and the like may be used as the chain carbonate. For an electrolyte salt in the non-aqueous electrolyte, LiPF₆, LiBF₄, LiCF₃SO₃, and the like, and a mixture thereof may be used. An amount of the electrolyte salt dissolved in the non-aqueous solvent may be, for example, 0.5 to 2.0 mol/L. Hereinafter, for convenience of description, the sealing assembly 16 side will be described as "the upper side", and the bottom side of the exterior housing body 15 will be described as "the lower side".

An opening end of the exterior housing body 15 is capped with the sealing assembly 16 to seal inside the secondary battery 10. Insulating plates 17 and 18 are provided on the upper and lower sides of the electrode assembly 14, respectively. A positive electrode lead 19 extends upward through a through hole of the insulating plate 17, and welded with the lower face of a filter 22, which is a bottom plate of the sealing assembly 16. In the secondary battery 10, a cap 26, which is a top plate of the sealing assembly 16 electrically connected to the filter 22, becomes a positive electrode terminal. Meanwhile, a negative electrode lead 20 extends through a through hole of the insulating plate 18 toward the bottom side of the exterior housing body 15, and welded with a bottom inner face of the exterior housing body 15. In the secondary battery 10, the exterior housing body 15 becomes a negative electrode terminal.

The exterior housing body 15 is a bottomed cylindrical metallic exterior housing can. The exterior housing body 15 is hard and barely deforms when an external stress is applied to the battery, and may protect the inside. Meanwhile, since the metallic exterior housing body 15 is hard and barely deforms, a contacting pressure generated between an electrode assembly 14 and the exterior housing body 15 increases when the electrode assembly 14 expands due to repeated charges and discharges.

As described above, the exterior housing body 15 may be in rectangular form. It is to be noted that the exterior housing body 15 in cylindrical form has a disc-shaped cross section in the horizontal direction, resulting in uniform distribution of stress inside the battery. Thus, the exterior housing body 15 in cylindrical form is less likely to expand as compared with a rectangular exterior housing body having an easily-expandable plain part, and the contacting pressure between the electrode assembly 14 and the exterior housing body 15 is likely to increase. Accordingly, the exterior housing body 15 in cylindrical form is likely to cause deformation, such as flexure, of the positive electrode 11 and negative electrode 12 from the fixing tape, and therefore easily exerts the effect of the present disclosure.

A gasket 27 is provided between the exterior housing body 15 and the sealing assembly 16 to achieve sealability inside the secondary battery 10. The exterior housing body 15 has a grooved part 21 formed by, for example, pressing the side part thereof from the outside to support the sealing assembly 16. The grooved part 21 is preferably formed circularly along the circumferential direction of the exterior housing body 15, and supports the sealing assembly 16 with the gasket 27 interposed therebetween and with the upper face of the grooved part 21.

The sealing assembly 16 has a stacked structure of a filter 22, a lower vent member 23, an insulating member 24, an upper vent member 25, and a cap 26 in this order from the electrode assembly 14 side. Each member constituting the sealing assembly 16 has, for example, a disk shape or a ring shape, and each member except for the insulating member 24 is electrically connected each other. The lower vent member 23 and the upper vent member 25 are connected each other at each of central parts thereof, and the insulating member 24 is interposed between each of the circumferential parts of the vent members 23 and 25. If the internal pressure of the battery increases with abnormal heat generation, for example, the lower vent member 23 breaks and the upper vent member 25 expands toward the cap 26 side to be separated from the lower vent member 23, resulting in cutting off of an electrical connection between the both members. If the internal pressure further increases, the upper vent member 25 breaks, and gas is discharged through an opening 26a of the cap 26.

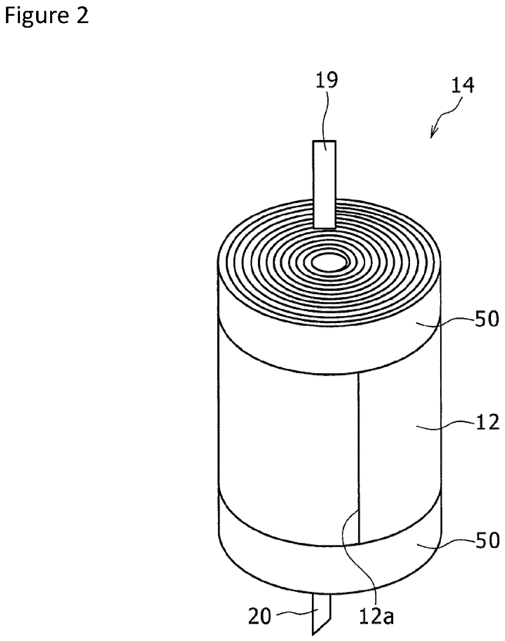

Next, the electrode assembly 14 will be described with reference to FIG. 2. FIG. 2 is a perspective view of the electrode assembly 14. As described above, the electrode assembly 14 has a wound structure in which the positive electrode 11 and the negative electrode 12 are spirally wound with the separator 13 interposed therebetween. Any of the positive electrode 11, the negative electrode 12, and the separator 13 is formed in a band shaped, and spirally wound around a winding core disposed along a winding axis to be alternately stacked in the radial direction of the electrode assembly 14. In the radial direction, the winding axial side is referred to as the inner peripheral side, and the opposite side is referred to as the outer peripheral side. In the electrode assembly 14, the longitudinal direction of the positive electrode 11 and negative electrode 12 corresponds to a winding direction, and the width direction of the positive electrode 11 and negative electrode 12 corresponds to an axial direction. The positive electrode lead 19 extends, on the upper end of the electrode assembly 14 toward the axial direction, from a substantial center between the center and the outermost circumference in the radial direction. The negative electrode lead 20 extends, on the lower end of the electrode assembly 14, toward the axial direction from near the winding axis.

The negative electrode 12 is exposed on the outermost circumference surface of the electrode assembly 14, and a fixing tape 50 is attached through both ends in the axial direction to the negative electrode 12. The fixing tape 50, which is a member for winding and fixing the electrode assembly 14, is attached so as to cover at least a part of a winding terminal end part 12a of the negative electrode 12. A width of the fixing tape 50 is not particularly limited, and for example, 3 mm to 30 mm, and may be 5 mm to 15 mm. A position and number of the fixing tape 50 is not particularly limited as long as it is attached so as to cover a part of the winding terminal end part 12a, which is exposed on the outermost circumference surface of the electrode assembly 14, and for example, the fixing tape 50 may be attached along the axial direction.

For the separator 13, a porous sheet having an ion permeation property and an insulation property is used. Specific examples of the porous sheet include a fine porous thin film, a woven fabric, and a nonwoven fabric. As a material of the separator 13, an olefin resin such as polyethylene and polypropylene is preferable. A thickness of the separator 13 is, for example, 10 µm to 50 µm. The separator 13 has tended to be thinned as higher capacity and higher output of the battery. The separator 13 has a melting point of, for example, approximately 130°C to 180°C.

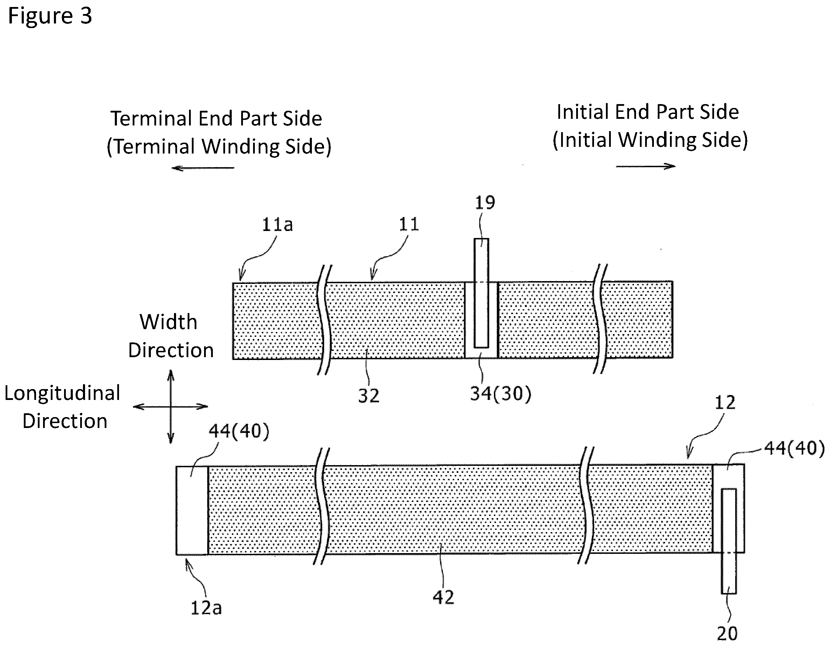

Next, the positive electrode 11 and negative electrode 12 constituting the electrode assembly 14 will be described with reference to FIG. 3. FIG. 3 illustrates the positive electrode 11 and the negative electrode 12 with an unwound state. The negative electrode 12 is formed to be larger than the positive electrode 11 to prevent precipitation of lithium on the negative electrode 12 in the electrode assembly 14. Specifically, a length in the width direction (axial direction) of the negative electrode 12 is larger than a length in the width direction of the positive electrode 11. In addition, a length in the longitudinal direction of the negative electrode 12 is larger than a length in the longitudinal direction of the positive electrode 11. As a result, an entirety of at least a portion on which the positive electrode mixture layer 32 of the positive electrode 11 is formed is disposed opposite to a portion on which negative electrode mixture layer 42 of the negative electrode 12 is formed with the separator 13 interposed therebetween when wound as the electrode assembly 14.

The positive electrode 11 has a band-shaped positive electrode current collector 30 and a positive electrode mixture layer 32 formed on both surfaces of the inner peripheral side and outer peripheral side of the positive electrode current collector 30. For the positive electrode current collector 30, a foil of a metal, such as aluminum, a film in which such a metal is disposed on a surface layer thereof, and the like are used, for example. A preferable positive electrode current collector 30 is a foil of aluminum or of a metal mainly composed of an aluminum alloy. A thickness of the positive electrode current collector 30 is, for example, 10 µm to 30 µm.

The positive electrode mixture layer 32 is preferably formed on an entire region of both surfaces of the positive electrode current collector 30 except for a positive electrode current collector exposed part 34, described later. The positive electrode mixture layer 32 preferably includes a positive electrode active material, a conductive agent, and a binder. The positive electrode 11 is produced by: applying a positive electrode mixture slurry including the positive electrode active material, the conductive agent, the binder, and a solvent such as N-methyl-2-pyrrolidone (NMP) on both surfaces of the positive electrode current collector 30; and then drying and compressing the positive electrode mixture layer 32.

Examples of the positive electrode active material may include a lithium-containing transition metal oxide containing a transition metal element such as Co, Mn, and Ni. The lithium-containing transition metal oxide is not particularly limited, and preferably a composite oxide represented by the general formula Li₁₊ₓMO₂ (in the formula, -0.2 < x ≤ 0.2 and M includes at least one of the group consisting of Ni, Co, Mn, and Al).

Examples of the conductive agent include carbon materials such as carbon black (CB), acetylene black (AB), Ketjenblack, and graphite. Examples of the binder include fluororesins such as polytetrafluoroethylene (PTFE) and polyvinylidene fluoride (PVdF), polyacrylonitrile (PAN), a polyimide (PI), an acrylic resin, and a polyolefin resin. With these resins, carboxymethyl cellulose (CMC) or a salt thereof, polyethylene oxide (PEO), and the like may be used in combination. These materials may be used singly, or may be used in combination of two or more thereof.

In the example illustrated in FIG. 3, the positive electrode current collector exposed part 34 is provided on a central part in the longitudinal direction of the positive electrode 11 and over an entire length in the width direction. The positive electrode current collector exposed part 34 is a portion where a surface of the positive electrode current collector 30 is uncovered with the positive electrode mixture layer 32. The positive electrode current collector exposed part 34 is provided by, for example, intermittent application in which the positive electrode mixture slurry is not applied on a part of the positive electrode current collector 30.

Onto the positive electrode current collector exposed part 34, one end of the positive electrode lead 19 is connected with ultrasonic welding or the like. The positive electrode current collector exposed part 34 is preferably provided on both surfaces of the positive electrode 11 to be stacked in the thickness direction of the positive electrode 11 from a viewpoint of operability of connecting the positive electrode lead 19. The positive electrode lead 19 is preferably provided at a position of substantially same distance from the winding initial end part and the winding terminal end part 11a from a viewpoint of current collectability. The other end of the positive electrode lead 19 extends upward from the end surface in the width direction at a medial position in the radial direction of the electrode assembly 14 when wound as the electrode assembly 14. The position of the positive electrode lead 19 to be disposed is not particularly limited to the example illustrated in FIG. 3, and the positive electrode current collector exposed part 34 may be provided corresponding to the position of the positive electrode lead 19 to be disposed.

The negative electrode 12 has the band-shaped negative electrode current collector 40 and the negative electrode mixture layer 42 formed on both surfaces of the negative electrode current collector 40. For the negative electrode current collector 40, a foil of a metal such as copper, a film in which such a metal is disposed on a surface layer thereof, or the like is used, for example. A thickness of the negative electrode current collector 40 is, for example, 5 µm to 30 µm.

The negative electrode mixture layer 42 is preferably formed on an entire region of both surfaces of the negative electrode current collector 40 except for a negative electrode current collector exposed part 44, described later. The negative electrode mixture layer 42 preferably includes a negative electrode active material and a binder. For example, the negative electrode 12 is produced by: applying a negative electrode mixture slurry including the negative electrode active material, the binder, water, and the like on both surfaces of the negative electrode current collector 40; and drying and compressing the negative electrode mixture layer 42.

The negative electrode active material is not particularly limited as long as it may reversibly occlude and release lithium ions, and for example, carbon materials such as natural graphite and artificial graphite, metals that form an alloy with lithium such as Si and Sn, or an alloy or oxide including them may be used. For the binder included in the negative electrode mixture layer 42, the resin similar to the positive electrode 11 is used, for example. When the negative electrode mixture slurry is prepared in an aqueous solvent, styrene-butadiene rubber (SBR), CMC or a salt thereof, polyacrylic acid or a salt thereof, polyvinyl alcohol, and the like may be used. These materials may be used singly, and may be used in combination of two or more thereof.

In the example illustrated in FIG. 3, the negative electrode current collector exposed part 44 is provided on the winding initial end part and winding terminal end part 12a in the longitudinal direction of the negative electrode 12 and over an entire length in the width direction of the current collector. The negative electrode current collector exposed part 44 is a portion where a surface of the negative electrode current collector 40 is uncovered with the negative electrode mixture layer 42. The negative electrode current collector exposed part 44 is provided by, for example, intermittent application in which the negative electrode mixture slurry is not applied on a part of the negative electrode current collector 40.

Onto the negative electrode current collector exposed part 44 of the winding initial end part, one end of the negative electrode lead 20 is connected with ultrasonic welding or the like. The negative electrode current collector exposed part 44 is preferably provided on both surfaces of the negative electrode 12 to be stacked in the thickness direction of the negative electrode 12 from a viewpoint of operability of connecting the negative electrode lead 20. The other end of the negative electrode lead 20 extends downward from the end surface in the width direction near the winding axial center of the electrode assembly 14 when wound as the electrode assembly 14. The position of the negative electrode lead 20 to be disposed is not particularly limited to the example illustrated in FIG. 3, and the negative electrode current collector exposed part 44 may be provided corresponding to the position of the negative electrode lead 20 to be disposed.

The negative electrode current collector exposed part 44 of the winding terminal end part 12a is positioned on the outermost circumference surface of the electrode assembly 14, and is in contact with the exterior housing body 15. Thus, a current pathway to the negative electrode terminal is achieved in addition to the negative electrode lead 20, resulting in improvement in output characteristics of the battery.

On the outermost circumference surface of the electrode assembly 14, the negative electrode 12 is exposed to achieve the current pathway to the negative electrode terminal of the winding terminal end part 12a, but the negative electrode current collector 40 is preferably exposed as an example of an embodiment. The negative electrode current collector 40 is more preferably exposed on an entire surface of the outermost circumference surface of the electrode assembly 14. Thus, a contacting area of the negative electrode current collector exposed part 44 and the exterior housing body 15 increases, resulting in improvement in output characteristics of the battery. When the negative electrode current collector 40 is exposed on the entire surface of the outermost circumference surface of the electrode assembly 14, a length in the longitudinal direction of the negative electrode current collector exposed part 44 may be larger than a length of the outermost circumference of the electrode assembly 14.

Although a case where the exterior housing body 15 is the negative electrode terminal in FIG. 3 is described above, the positive electrode 11 may be exposed on the outermost circumference surface of the electrode assembly 14 when the exterior housing body 15 is the positive electrode terminal. As a result, a current pathway of the winding terminal end part 11a of the positive electrode 11 to the positive electrode terminal is achieved. The fixing tape 50 is attached so as to cover at least a part of the winding terminal end part 11a of the positive electrode 11 exposed to the outermost circumference surface of the electrode assembly 14. Similar to the case where the negative electrode 12 is exposed to the outermost circumference surface of the electrode assembly 14, it is preferable that the positive electrode current collector exposed part 34 be provided on the winding terminal end part 11a of the positive electrode 11, and the positive electrode current collector 30 be exposed on the outermost circumference surface of the electrode assembly 14.

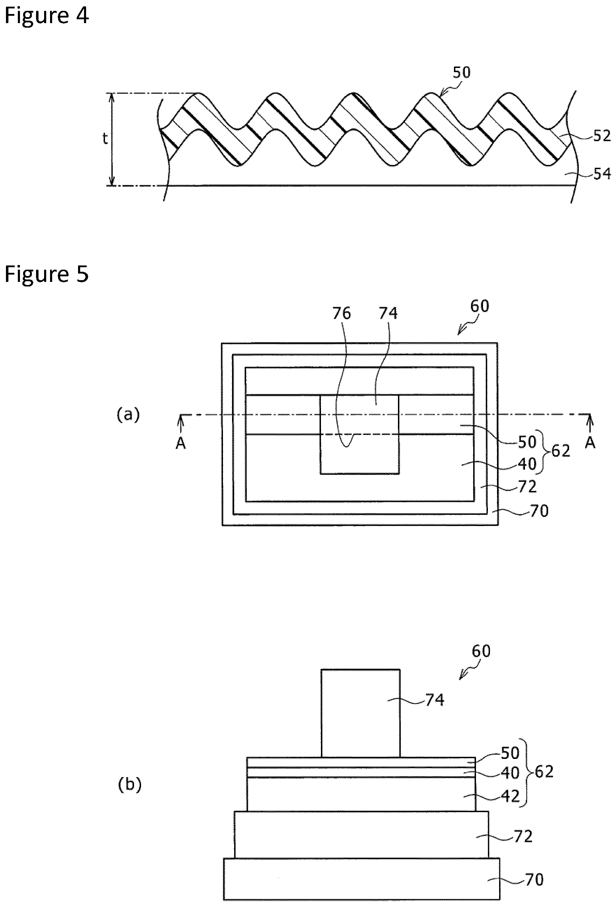

Next, the fixing tape 50, which is a member for winding and fixing the electrode assembly 14, will be described with reference to FIG. 4. FIG. 4 is a sectional view of the fixing tape 50 of an example of an embodiment. The fixing tape 50 has a substrate layer 52 and an adhesive layer 54, and is attached to the positive electrode 11 or negative electrode 12 exposed to the outermost circumference surface of the electrode assembly 14 by means of the adhesive layer 54.

The substrate layer 52 has an uneven shape on the surface thereof as illustrated in FIG. 4. An interval of the uneven shape on the surface of the substrate layer 52 may be regular, and may be irregular. On the surface of the substrate layer 52, the unevenness may be present in a specific direction, but is preferably present in all the direction.

The substrate layer 52 has a surface roughness (Sa) of 40 µm or more on a region having a width of at least 1 mm from the end part. Setting the surface roughness (Sa) near the end part of the fixing tape 50, which is likely to concentrate a stress due to the contacting pressure between the electrode assembly 14 and the exterior housing body 15, to be 40 µm or more relaxes the stress, and may prevent the deformation, such as flexure, of the positive electrode 11 and negative electrode 12. Here, the surface roughness (Sa) is defined by ISO25178, and may be measured with a commercially available microscope such as VR-3200 manufactured by KEYENCE.

An entire surface of the substrate layer 52 preferably has the surface roughness (Sa) of 40 µm or more. As a result, not only a surface near the end part of the substrate layer 52 but also the entire surface of the substrate layer 52 relaxes the stress; thus, the deformation, such as flexure, of the positive electrode 11 and negative electrode 12 is more certainly prevented.

The surface roughness (Sa) on the substrate layer 52 is preferably 150 µm or less from a viewpoint of maintenance of battery characteristics. A larger surface roughness (Sa) on the substrate layer 52 increases a thickness of the fixing tape 50, resulting in a decreased space for housing the electrode assembly 14 and the electrolyte in the exterior housing body 15.

The substrate layer 52 may be appropriately selected from viewpoints of strength, resistance against the electrolyte liquid, processability, cost, and the like, and for example, PP (polypropylene), PI (polyimide), PET (polyethylene terephthalate), or the like may be used. The adhesive layer 54 is preferably a resin having adhesiveness at room temperature, and for example, an acrylic resin and a rubber resin may be used.

In FIG. 4, t represents a thickness of the fixing tape 50. The numeral t represents a thickness from a top of the substrate layer 52 to a surface of the adhesive layer 54. The numeral t is, for example, 20 µm to 200 µm, and preferably 50 µm to 100 µm.

A method of producing the uneven shape on the surface of the substrate layer 52 is not particularly limited, and the uneven shape may be produced by, for example, pressing the fixing tape 50 in which a laminated paper is adhered to the adhesive layer 54 against a roller having an uneven shape on a surface thereof. The surface roughness (Sa) on the substrate layer 52 may be regulated with a surface roughness (Sa) of the roller and a pressing pressure of the roller. For example, pressing a roller having a surface roughness (Sa) of 200 µm to 400 µm with a linear pressure of 10 kgf/cm to 100 kgf/cm enables to produce the fixing tape 50 having the surface roughness (Sa) of 40 µm or more.

### EXAMPLES

The present disclosure will be further described below with Examples, but the present disclosure is not limited to these Examples.

### <Example 1>

### [Production of Specimen]

Mixing of 95 parts by mass of graphite, 5 parts by mass of SiO, 1 part by mass of carboxymethyl cellulose (CMC), and 1 part by mass of styrene-butadiene rubber (SBR) was performed, and an appropriate amount of water was added thereto to prepare a negative electrode mixture slurry. Then, the negative electrode mixture slurry was applied on one surface of a band-shaped negative electrode current collector made with a copper foil having a thickness of 8 µm, and then the applied film was dried. The dried applied film was compressed by using a roller, and then cut to a predetermined electrode size to produce a negative electrode in which a negative electrode mixture layer was formed on the one surface of the negative electrode current collector.

An adhesive layer of an acrylic adhesive was applied with 10 µm on a substrate layer made with polypropylene (PP) having a thickness of 20 µm to produce a flat-plate tape. Then, a polypropylene (PP) laminated paper on which a mold releasing agent was applied was adhered on the adhesive layer side, a roller having a unevenness with a surface roughness of 320 µm was pressed from the substrate layer side with a linear pressure of 60 kgf/cm, and then the pressed tape was cut to a 10-mm width to produce a fixing tape having an uneven shape on an entire surface on the substrate layer side.

The fixing tape in which the laminated paper was peeled was attached to a side of the negative electrode on which the negative electrode mixture layer was not formed to produce a specimen.

### <Example 2>

A specimen was produced in the same manner as in Example 1 except that the linear pressure of compressing the flat-plate tape with the roller was changed to 40 kgf/cm.

### <Example 3>

A specimen was produced in the same manner as in Example 1 except that the linear pressure of compressing the flat-plate tape with the roller was changed to 20 kgf/cm.

### <Comparative Example 1>

A specimen was produced in the same manner as in Example 1 except that the linear pressure of compressing the flat-plate tape with the roller was changed to 5 kgf/cm.

### <Comparative Example 2>

A specimen was produced in the same manner as in Example 1 except that the flat-plate tape was not compressed with a roller.

### [Measurement of Surface Roughness (Sa) on Substrate Layer]

Before the fixing tape was attached to the negative electrode, surface roughnesses (Sa) of the fixing tapes produced in Examples 1 to 3 and Comparative Examples 1 to 2 were measured by using VR-3200 manufactured by KEYENCE under a condition of magnification of 25.

### [Stress Application Test]

On the specimens of Examples 1 to 3 and Comparative Examples 1 to 2, a stress application test was performed by using a stress applying apparatus illustrated in FIG. 5 to evaluate possibility of occurrence of the deformation, such as flexure, of the positive electrode and negative electrode derived from the fixing tape. Details of the stress application test are as follows.

FIG. 5(a) is a plan view of a stress applying apparatus 60, and FIG. 5(b) is a sectional view from the arrow direction on the A-A line in FIG. 5(a). The stress applying apparatus 60 has a specimen stage 70, a chloroprene rubber sheet 72 as a buffer, and an indenter 74. As illustrated in FIG. 5(b), a specimen 62 was disposed on the chloroprene rubber sheet 72 so that the negative electrode mixture layer 42 directed downward and the fixing tape 50 directed upward. As illustrated in FIG. 5(a), in the specimen 62, the fixing tape 50 with a 10-mm width covers a part of the negative electrode current collector 40. After the specimen 62 was disposed, a stress of 4 kN was applied for 10 seconds by the indenter with 20-mm square to a range including a boundary line between the negative electrode current collector 40 and the fixing tape 50. In this test, a larger stress is applied to the specimen 62 than an actual stress that will be applied from the exterior housing body 15 to the outermost circumference surface of the electrode assembly 14. Thus, a fixing tape 50 having a large impact to the deformation, such as flexure, of the positive electrode and negative electrode will break the negative electrode current collector 40 at a breakage evaluating portion 76 corresponding to the boundary line between the negative electrode current collector 40 and the fixing tape 50. Meanwhile, a fixing tape 50 having a small impact to the deformation, such as flexure, of the positive electrode and negative electrode will prevent the breakage of the negative electrode current collector 40 at the breakage evaluating portion 76. Thus, in this test, presence/absence of a breakage of the negative electrode current collector 40 at the breakage evaluating portion 76 after the test was observed to evaluate the possibility of occurrence of the deformation, such as flexure, of the positive electrode and negative electrode derived from the fixing tape 50.

A surface roughness (Sa) of each of the fixing tapes used in Examples 1 to 3 and Comparative Examples 1 to 2 and a presence/absence of the breakage of each specimen after the test are shown in Table 1.

**[Table 1]**

| | Surface Roughness (Sa) of Fixing Tape | Presence/Absence of Breakage |
|---|---|---|
| Example 1 | 89 µm | Absence |
| Example 2 | 61 µm | Absence |
| Example 3 | 40 µm | Absence |
| Comparative Example 1 | 15 µm | Presence |
| Comparative Example 2 | 7 µm | Presence |

In Comparative Examples 1 to 2, which had a small surface roughness (Sa) of the fixing tape, the negative electrode current collector was broken at the breakage evaluating portion. Meanwhile, in Examples 1 to 3, which had a large surface roughness (Sa) of the fixing tape, the negative electrode current collector was not broken. In other words, in Examples 1 to 3, the fixing tape has a small impact to the deformation, such as flexure, of the positive electrode and negative electrode, resulting in a low possibility of occurrence of the deformation of the positive electrode and negative electrode derived from the fixing tape. From the results, it is found that a large surface roughness (Sa) of the fixing tape may prevent the deformation, such as flexure, of the negative electrode and positive electrode even when the contacting pressure occurs between the electrode assembly and the exterior housing body.

### REFERENCE SIGNS LIST

10 Secondary battery, 11 Positive electrode, 12 Negative electrode, 12a Winding terminal end part, 13 Separator, 14 Electrode assembly, 15 Exterior housing body, 16 Sealing assembly, 17, 18 Insulating plate, 19 Positive electrode lead, 20 Negative electrode lead, 21 Grooved part, 22 Filter, 23 Lower vent member, 24 Insulating member, 25 Upper vent member, 26 Cap, 26a Opening, 27 Gasket, 30 Positive electrode current collector, 32 Positive electrode mixture layer, 34 Positive electrode current collector exposed part, 40 Negative electrode current collector, 42 Negative electrode mixture layer, 44 Negative electrode current collector exposed part, 50 Fixing tape, 52 Substrate layer, 54 Adhesive layer, 60 Stress applying apparatus, 62 Specimen, 70 Specimen stage, 72 Chloroprene rubber sheet, 74 Indenter, 76 Breakage evaluating portion

## Claims

1. A non-aqueous electrolyte secondary battery (10), comprising:
a wound electrode assembly (14) in which a band-shaped positive electrode (11) and a band-shaped negative electrode (12) are wound with a separator (13) interposed therebetween; and
a metallic exterior housing body (15) that houses the electrode assembly (14), wherein
the positive electrode (11) or the negative electrode (12) is exposed on an outermost circumference surface of the electrode assembly (14), and a fixing tape (50) having a substrate layer (52) and an adhesive layer (54) is attached to the positive electrode (11) or the negative electrode (12) by means of the adhesive layer (54);
the fixing tape (50) is attached so as to cover at least a part of a winding terminal end part of the positive electrode (11) or the negative electrode (12) exposed on the outermost circumference surface of the electrode assembly (14); and
the substrate layer (52) has a surface roughness (Sa) of 40 µm or more on a region having a width of at least 1 mm from the end part, where the surface roughness is defined by ISO25178.

2. The non-aqueous electrolyte secondary battery (10) according to claim 1, wherein the exterior housing body (15) is in cylindrical form.

3. The non-aqueous electrolyte secondary battery (10) according to claim 1 or 2, wherein
the positive electrode (11) has a positive electrode current collector (30) and a positive electrode mixture layer (32) formed on a surface of the positive electrode current collector (30);
the negative electrode (12) has a negative electrode current collector (40) and a negative electrode mixture layer (42) formed on a surface of the negative electrode current collector (40); and
the positive electrode current collector (30) or the negative electrode current collector (40) is exposed on the outermost circumference surface of the electrode assembly (14).

4. The non-aqueous electrolyte secondary battery (10) according to claim 3, wherein the negative electrode current collector (40) is exposed on an entire surface of the outermost circumference surface of the electrode assembly (14).

5. The non-aqueous electrolyte secondary battery (10) according to any one of claims 1 to 4, wherein a surface roughness (Sa) of an entire surface of the substrate layer (52) is 40 µm or more, where the surface roughness is defined by ISO25178.

## Patentansprüche

1. Sekundärbatterie (10) mit wasserfreiem Elektrolyt, umfassend:
eine gewickelte Elektrodenanordnung (14) in der eine streifenförmige Positivelektrode (11) und eine streifenförmige Negativelektrode (12) mit einem dazwischen gelegten Separator (13) gewickelt sind; und
einen metallischen äußeren Gehäusekörper (15), der die Elektrodenanordnung (14) unterbringt, wobei
die Positivelektrode (11) oder die Negativelektrode (12) auf einer äußersten Umfangsoberfläche der Elektrodenanordnung (14) freiliegt und ein Fixierungsband (50), das eine Substratschicht (52) und eine Haftschicht (54) aufweist, mittels der Haftschicht (54) an der Positivelektrode (11) oder der Negativelektrode (12) angebracht ist;
das Fixierungsband (50) derart angebracht ist, dass es zumindest einen Teil eines Wicklungsanschluss-Endteils der Positivelektrode (11) oder der Negativelektrode (12) bedeckt, der auf der äußersten Umfangsoberfläche der Elektrodenanordnung (14) freiliegt; und
die Substratschicht (52) auf einer Region, die eine Breite von mindestens 1 mm von dem Endteil aufweist, eine Oberflächenrauigkeit (Sa) von 40 µm oder höher aufweist, wobei die Oberflächenrauigkeit durch ISO25178 definiert ist.

2. Sekundärbatterie (10) mit wasserfreiem Elektrolyt nach Anspruch 1, wobei der äußere Gehäusekörper (15) in zylindrischer Form vorliegt.

3. Sekundärbatterie (10) mit wasserfreiem Elektrolyt nach Anspruch 1 oder 2, wobei
die Positivelektrode (11) einen Positivelektroden-Stromkollektor (30) und eine Positivelektroden-Gemischschicht (32) aufweist, die auf einer Oberfläche des Positivelektroden-Stromkollektors (30) gebildet ist;
die Negativelektrode (12) einen Negativelektroden-Stromkollektor (40) und eine Negativelektroden-Gemischschicht (42) aufweist, die auf einer Oberfläche des Negativelektroden-Stromkollektors (40) gebildet ist; und
der Positivelektroden-Stromkollektor (30) und der Negativelektroden-Stromkollektor (40) auf der äußersten Umfangsoberfläche der Elektrodenanordnung (14) freiliegt.

4. Sekundärbatterie (10) mit wasserfreiem Elektrolyt nach Anspruch 3, wobei der Negativelektroden-Stromkollektor (40) auf einer gesamten Oberfläche der äußersten Umfangsoberfläche der Elektrodenanordnung (14) freiliegt.

5. Sekundärbatterie (10) mit wasserfreiem Elektrolyt nach einem der Ansprüche 1 bis 4, wobei eine Oberflächenrauigkeit (Sa) einer gesamten Oberfläche der Substratschicht (52) 40 µm oder höher ist, wobei die Oberflächenrauigkeit durch ISO25178 definiert ist.

## Revendications

1. Batterie rechargeable à électrolyte non aqueux (10), comprenant :
un assemblage d'électrodes enroulé (14) dans lequel une électrode positive en forme de bande (11) et une électrode négative en forme de bande (12) sont enroulées avec un séparateur (13) interposé entre elles ; et
un corps de boîtier extérieur métallique (15) qui loge l'assemblage d'électrodes (14),
dans laquelle
l'électrode positive (11) ou l'électrode négative (12) est exposée sur la surface circonférentielle la plus extérieure de l'assemblage d'électrodes (14), et une bande de fixation (50) ayant une couche de substrat (52) et une couche adhésive (54) est attachée à l'électrode positive (11) ou à l'électrode négative (12) au moyen de la couche adhésive (54) ;
la bande de fixation (50) est attachée de façon à couvrir au moins une partie d'une partie d'extrémité terminale d'enroulement de l'électrode positive (11) ou de l'électrode négative (12) exposée sur la surface circonférentielle la plus extérieure de l'assemblage d'électrodes (14) ; et
la couche de substrat (52) a une rugosité de surface (Sa) de 40 µm ou plus sur une région ayant une largeur d'au moins 1 mm depuis la partie d'extrémité, où la rugosité de surface est définie par la norme ISO25178.

2. Batterie rechargeable à électrolyte non aqueux (10) selon la revendication 1, dans laquelle le corps de boîtier extérieur (15) est de forme cylindrique.

3. Batterie rechargeable à électrolyte non aqueux (10) selon la revendication 1 ou 2, dans laquelle
l'électrode positive (11) a un collecteur de courant d'électrode positive (30) et une couche de mélange d'électrode positive (32) formée sur une surface du collecteur de courant d'électrode positive (30) ;
l'électrode négative (12) a un collecteur de courant d'électrode négative (40) et une couche de mélange d'électrode négative (42) formée sur une surface du collecteur de courant d'électrode négative (40) ; et
le collecteur de courant d'électrode positive (30) ou le collecteur de courant d'électrode négative (40) est exposé sur la surface circonférentielle la plus extérieure de l'assemblage d'électrodes (14).

4. Batterie rechargeable à électrolyte non aqueux (10) selon la revendication 3, dans laquelle le collecteur de courant d'électrode négative (40) est exposé sur toute la surface de la surface circonférentielle la plus extérieure de l'assemblage d'électrodes (14).

5. Batterie rechargeable à électrolyte non aqueux (10) selon l'une quelconque des revendications 1 à 4, dans laquelle la rugosité de surface (Sa) de toute la surface de la couche de substrat (52) est de 40 µm ou plus, où la rugosité de surface est définie par la norme ISO25178.
